# EUROPEAN PATENT APPLICATION

(11) **EP 0 645 610 A2**
(43) Date of publication of application: **29.03.1995**
(21) Application number: 94500158.4
(22) Date of filing: 23.09.1994
(51) Int. Cl.: H04M 11/00, G01F 15/06, G01F 23/00

(54) **Oil liquefied gases telemetering system.**

(30) Priority: 28.09.1993 ES 9302049
(71) Applicant: REPSOL-BUTANO, S.A., E-28015 Madrid (ES)
(72) Inventor: Méndes Rutllàn, Andrés, E-28100 Alcobendas (ES); Pons Pérez, José, E-28008 Madrid (ES)
(74) Representative: Riera Blanco, Juan Carlos

(57) **Abstract**

The oil liquefied gases telemetering system consists of three subsystems or broken down equipments configured as a Data Collection Centre in which the data are accepted through a PC-AT type computer or compatible, in which are incorporated a data base, a Telemetering Remote Unit physically forming the equipment that makes the deposit data gathering, the processing thereof, as well as the communication of these data to the Data Collection Centre and a deposit unit that constitutes a Telemetering Remote Unit subsystem, its embodiment being optional according to the selected configuration, which is totally autonomous and not governed by the Telemetering Remote Unit, gathering the data in a similar way as the Telemetering Remote Unit, carrying out a pre-processing thereof, and the communication via radio, via telephone to the Telemetering Remote Unit.

## Description

### OBJECT OF THE INVENTION

The present descriptive memory refers to a patent of invention, comprising an oil liquefied gases telemetering system, which obvious object is the reading of the filling level of a deposit containing the concerned gases, the treatment thereof and its transmission to a data collection and data processing centre.

Marginally to the level reading, the invention comprises other readings of analogue and digital character, which correspond to a sensor that indicates the degree of the deposit corrosion and to some inputs subdivided in two groups named inputs for user and for system, treating these inputs in a similar way as in the level reading.

In order to make the transmission towards the data collection centre, the invention contemplates the possibility of making the transmission through the switched-over telephone network as either physical support or via radio.

### FIELD OF THE INVENTION

This invention has its application within the industry dedicated to the manufacturing of metering systems in all its fields.

### BACKGROUND OF THE INVENTION

At present it is known the existence of data registration and transmission multiple systems for various uses, from the ones constituted by one unit that receives information from various registering elements, which gathers the information and afterwards is transmitted from different methods, by direct contact, transported using the own supply lines, via radio, etc., etc., to the elements that record the data at individual level of each register and then the information is transmitted by the methods already described or recorded in magnetic supports of all kinds, which are physically transported.

Nevertheless, any of them solves in one unit all the services, due to the fact that the majority of the known systems are designed to integrate different information sources, such is the case of the supply meters of electrical power, gas, water, etc., etc, with the purpose of meeting in a circuit that integrates the intelligence of the system and the radio unit.

These applications or systems remarkably impede the systems concerned, as they are obliged to use better installations than the ones that would be profitable, in relation to the degree of concentration of the meters to be read, since the intelligent or concentrating unit, has equal cost for a high number of meters to be read, and then transmits this reading, than for a reduced number of meters.

Batz, U.S. patent number 3,967,202, in which reference is made also to U.S. patent numbers 2,380,959, 2,422,664, 2,839,604, 3,058,065, 3,493,965 and 3,705,385, describing in the main patent a data transmission system for the information gathered, of a plurality of data sources, including an inquiring source that operates through radio frequency signal transmission asking to the data source what is desired to obtain, which has available a transponder.

All of that operates in FM and generates a wide spectrum of lateral bands to support the information.

Simclak U.S. patent n° 4,031,513, wherein it is recited as background the U.S. patent numbers 2,607,004, 3,566,384 and 3,705,385, describing in the above main patent an improvement in the reading of remote metering, transmitting in UHF and AM, the information to a fixed or mobile central unit, after energizing the transponder, in which a system of data validation is included.

Gastouniotis U.S. patent number 4,940,976, wherein it is recited as background of the invention the U.S. patent numbers 4,253,341 and 4,749,992, describing in the main patent a metering system of the magnetic flow generated by the rotation of the internal, rotable element, of a water meter.

This variable flow is converted in a periodic signal proportional to the water flow.

The instant flow is continuously totalled and stored in a solid state meter, which information is transmitted periodically to a remote station through a standard radiofrequency connection.

This patent offers as an option, a display that may indicate water leakage and a thermoelectric generator that takes advantage of the room temperature to extend the unit life.

In Johnson U.S. patent number 5,056,107, wherein it is recited as patent background registration in the U.S. patent numbers 4,361,851 and 4,799,959, a radiocommunication network is described for transmitting data of a plurality of remote stations.

This system is particularly applicable to the reading systems of the installed meters.

Communicating the information by different channels provides more reliability to the reading concentration system.

Tanguay U.S. patent number 5.089.771, wherein it is recited as background of the invention the U.S. patent numbers 3,127,594, 3,842,268, 3,875,406, 4,034,292, 4,201, 911, 4,204,113, 4,321,531, 4,327,362 and 4,928,009, it is described a device for watts-hour supply meter of electrical power with a rotating system, a light beam, a light detector and a system for measuring pulses originated by the light detector, protected from the exterior light in order to maintain the readings unaltered.

It has a reading transmission system through a data recorder and, all of this, allows the remote reading of the electricity supplies.

In Spain, the patent numbers 2,023,053 and 2,029,406. are shown as the most recent invention patents.

In the Spanish patent number 2,023,053, it is described a particular case of the remote data reading systems, applicable to the electrical energy supplies and other types of meters, and constituted by a module that registers the impulses coming from a contact free of potential, which must be incorporated by the meter.

As characteristics it has the ability to connect various of these modules in parallel, all of them comprised in one box or grouping module which is not intelligent, using binary meters for the data register module, and feeding this latter with lithium batteries (that it seems to recharge, which is not feasible in batteries and lithium batteries, due to the substantial risk that entails).

It is included in this patent the reading method of the registered data, its preprocessing and its transferred to the ratemaking computer.

In the Spanish invention patent number 2,029,406 it is described a pulse registering autonomous system with reading via radio and/or via laptop computer.

This second patent is an extension of the already above mentioned, also carried out by the same inventors, that is, by the electricity distributing company known by the name of Union Eléctrica, that adds to the previous patent the possibility of data transmission, via radio, to another radio unit that is joined with its interface to a laptop computer.

Nevertheless, there are multiple tasks of computing and metering that require their individualized registration, which must be read later on in order to manage their result.

Such is the case of the electric power supply domestic meters, water, gas, etc., but it is also necessary to register and transmit data produced in hostile environmental conditions, such as the piping and tubing for the transport and distribution of all kind of liquids and fluids, where besides, the fact of providing the remote information of the flows measured in a given point, would allow -totalizing different readings- to determine losses and leakages in the transport and distribution, which will contribute to maintain the security of the properties and persons, since it could be foreseen, with sufficient anticipation, the explosions produced by gas leakages, the electric energy conduits could be repaired more rapidly, etc., etc., since it could be determined, with a great deal of accuracy, the quantity of the leakage and almost the place where the abnormal situation has occurred.

It will be desirable to rely on an invention that would allow at the same time to make readings of the liquefied gases deposit content, to be able to determine exactly the existence of a problem or deterioration in the interior thereof.

Nevertheless, up to the present there is no knowledge of the existence of an invention that contemplates all the features determined as suitable.

### DESCRIPTION OF THE INVENTION

The oil gases telemetering system that the invention proposes, constitutes by itself an obvious solution of the present existing problems on this matter, since all the advantages considered as suitable are contemplated, and at the same time incorporates a series of particular features which potentiate it even more, if that is possible.

In a more specific way, the oil liquefied gases telemetering system, in its physical embodiment, is formed of three subsystems or equipments. Namely:
- Data Collection Centre
- Telemetering Remote Unit
- Deposit Unit

The data collecting centre is formed by a PC-AT type computer or compatible, in which there is a data base, as well as the relevant software that manages such base, also forming part of the data base collection centre the logical and physical support that carries out the communication with the different telemetering remote units.

The telemetering remote unit physically constitutes the equipment that carries out the data gathering from the deposit, their processing, as well as the communication with the data collection centre.

The deposit unit constitutes a subsystem of the telemetering remote unit that, depending on the selected configuration thereof, will appear or not.

The deposit unit is totally autonomous, not being governed by the telemetering remote unit and basically the deposit unit takes care of the data gathering in a similar way as the telemetering remote unit equally effects a preprocessing thereof and the communication via radio to the telemetering remote unit of such data.

The data collection centre or unloading centre is the body in charge of receiving the calls coming from the telemetering units, making its remote programming and storing and managing the data received.

It is physically constituted as it has been established previously by a PC or similar, which has a colour monitor, a display adaptor, a flexible disc unit, a RAM memory, the pertinent hard disc, inlets for keyboards, mouse and printer, and an operative system.

The PC must have two modems installed, which function at 300 bauds each one connected to a telephone line box.

Optionally, the data collection centre may incorporate a printer in order to obtain the lists and reports related to the system.

The telemetering remote unit is in charge of receiving the data coming from the deposit, they are processed and then according to the programmed time, they are sent to the data collection centre described above.

The telemetering remote unit incorporates a keyboard and display unit, that is connected thereof through a 25 poles connector, necessary to undertake the supervising and programming manual functions.

The design of the telemetering remote unit permits to accept the following inputs:
- Level
- Corrosion
- Inputs ON/OFF.

The level input installed in the telemetering remote unit may process the outlet analogical values of a resistive type sensor with one pole of variable resistance in electrical contact with the deposit that acts as ground connection.

The resistance will linearly change with the position of the buoy or sensor float, that is, with the deposit level.

In the design of the telemetering remote unit it has been foreseen the possibility of using four types of different sensors depending on the value of the resistance with a variation from 0% to 100%.

The corrosion input accepts tension analogical values from 0 to +2V of the deposit (common ground connection for the level sensor) and a reference electrode copper/copper sulphate type for a fixed installation.

The inputs ON/OFF are configurated in two types. Namely:
- System inputs
- User inputs

In the system inputs there are available four inputs, characterized by their structure, that is, the condition ON indicates a resistance value less or equal than a predetermined value, while the condition OFF indicates a resistance value greater than a predeterminated value.

These inputs are endowed with meter or alarm mode functionality which are capable of being programmed via telephone from the data collection centre.

With respect to the users inputs, four inputs are available that equally indicate the resistance values, while the deactivated condition is OFF when detecting the active condition ON, a call is produced to a preselected number by the user and the transmission of a prefixed message, with a maximum of 30 characters plus an identifier of two characters of the activated input.

This alarm remains active until the communication is made with the data collection centre if it is activated again when a new pitch is detected from OFF to ON.

The types of telemetering remote units are observed in four different versions, as a function of their connection to the sensor (Interface), as well as their feeding mode. Namely:
- Connection with the deposit for the level reading and corrosion, by cable or by radio.
- Feeding mode, that is, by alternate network (127/220 Vac) and telephone network (telefeeding).

The different units are named as follows:
- URT-1 is connected to the deposit by cable, network feeding, this unit is assigned to installations with very frequent supervision, which are endowed with direct access to the deposit and having a back-up with battery for 2 hours.
- URT-2 is connected to the deposit by cable, telephone network feeding (telefeeding), this unit is assigned to installations with low supervision, that is, no greater than 6 times per day, and direct access to the deposit, equally having a back-up with battery for one week, only for the purpose of supervision.
- URT-3 is connected to the deposit by radio, telephone network feeding and this unit is assigned to installations with low supervision, not greater than 6 times per day, without direct access to the deposit, having a back-up with battery for one week, only for the purpose of supervision.
- URT-4 is connected to the deposit by radio, telephone network feeding (telefeeding), this unit is assigned to installations with low supervision, not greater than 6 times per day, without direct access to the deposit and having a back-up with battery for 2 hours.

The deposit unit, is totally necessary in installations which require the use of telemetering remote units, of the type mentioned in URT-3 and 4, that is, the connection to the deposit is made by radio.

On one hand the deposit unit is connected to the deposit, in the same way as the telemetering remote unit, through two inputs for data gathering.

The level input may process the output analogical values of a resistive type sensor, with the variable resistance pole in electrical contact with the deposit that acts as ground connection, the resistance linearly varying with the position of the buoy or sensor float, that is, with the deposit level.

It has been foreseen the possibility of using four types of different sensors, depending on the resistance value with a variation from 0% to 100%.

The corrosion input, affects the tension analogical values from 0 to +2V, of the deposit, having common ground connection to the level sensor and a reference electrode, copper/copper sulphate type for a fixed installation.

It has been foreseen only one sensor model for the control of buried deposit.

On the other hand, it is connected to the telemetering remote unit by radio, in order to send the data previously processed, coming from the deposit sensors.

The functioning of the deposit unit is independent from the functioning of the telemetering remote unit, both units being synchronized through temporary windows.

It must be pointed out that a temporal window, is configurated as the time interval reserved for the transmission of the deposit data and both units, that is, the telemetering remote unit and the deposit unit, have available a real time clock initially synchronized, that calculates the starting time of data gathering and transmission thereof, by the deposit unit and the reception of such data by the telemetering remote unit.

### DESCRIPTION OF THE DRAWINGS

In order to complement the description that is being made and with the purpose of supporting a better understanding of the invention characteristics, it is accompanied to the present descriptive memory as an integrating part thereof, three drawing sheets, in which it has been shown as an illustrative character and not limiting, the following:

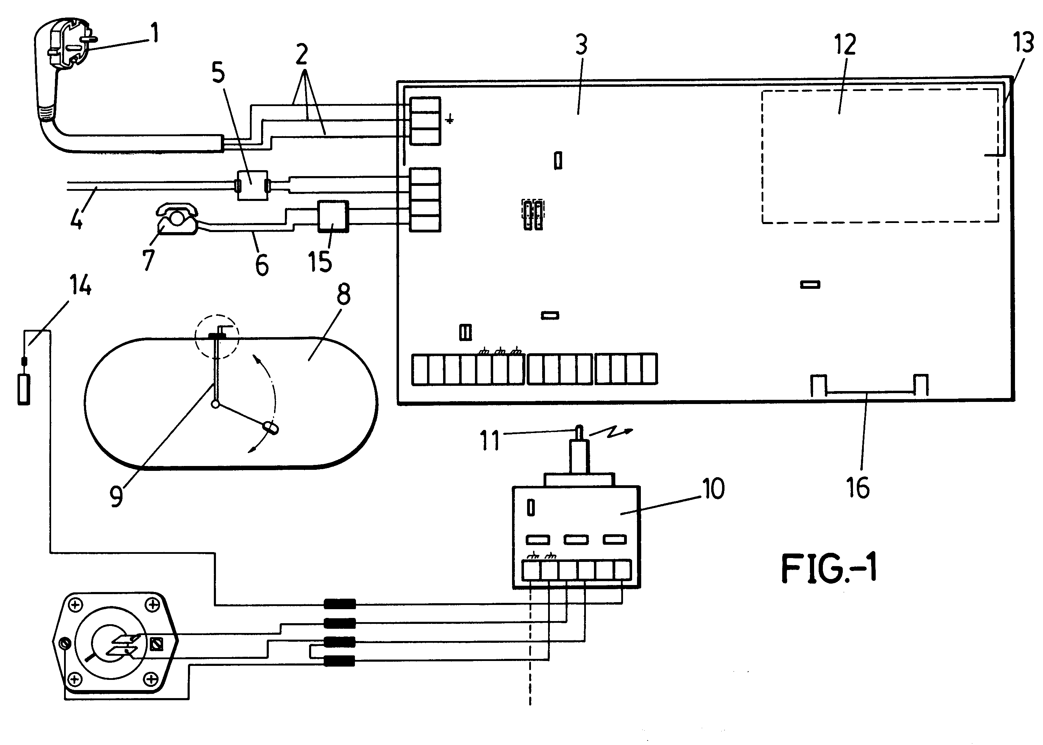

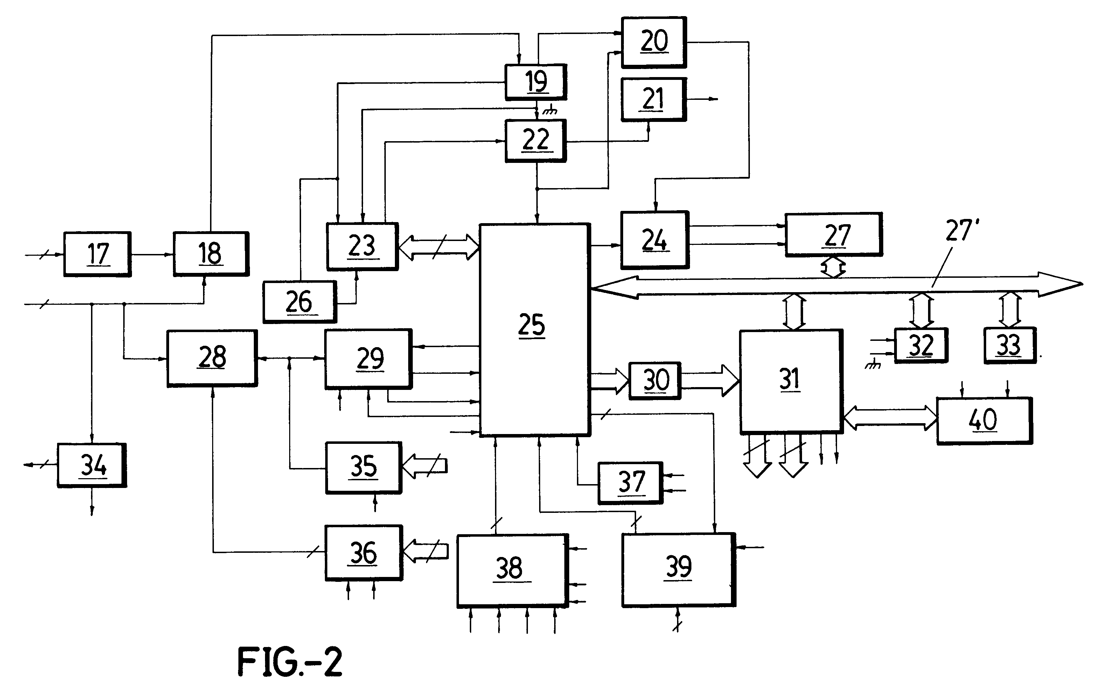

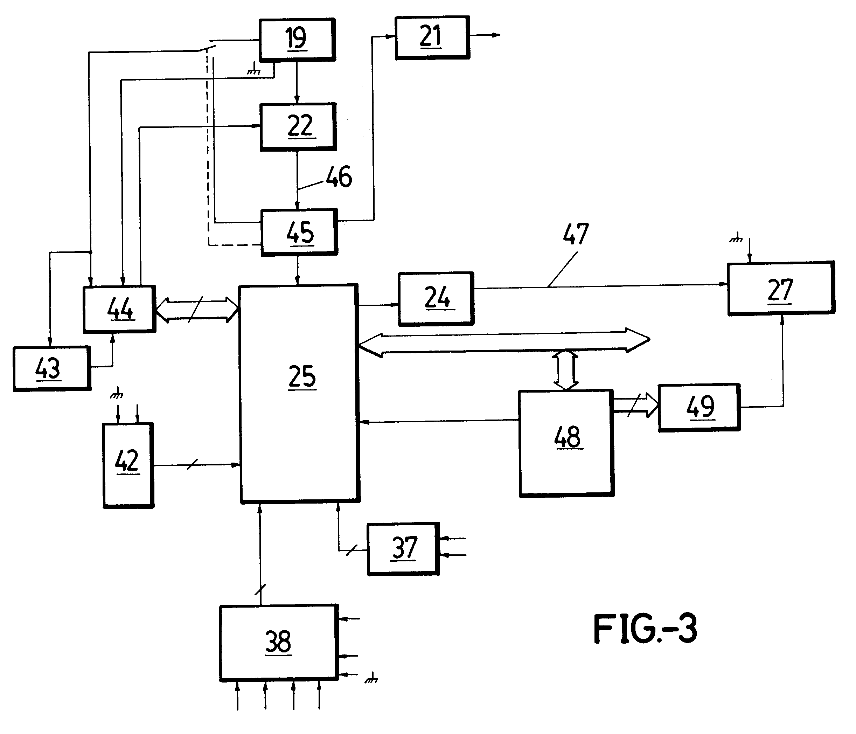

The figure number 1 shows an schematic view of the different elements that are in harmonic relation in order to configurate the oil liquefied gas telemetering system which is the object of the invention.

The figure number 2 shows a diagram of blocks of the elements that act configurating the above mentioned system.

The figure number 3 shows again a second diagram that complements the one represented in the figure number 2.

### PREFERRED EMBODIMENT OF THE INVENTION

As it has been stated in the description of the invention, this is configurated through a Data Collection Centre, a Telemetering Remote Unit and a Deposit Unit.

The Data Collection Centre has a PC available, provided with two installed modems, which allow the reception of telephone calls or via radio, coming from each Telemetering Remote Unit that is assigned to the corresponding centre.

The use of the PC, must be exclusive as Unloading Centre, being connected 24 hours per day for the correct reception of the information coming from the telemeterings of the Telemetering Remote Units.

With the messages received, a data base is put up to date in which the condition of the deposits are contemplated and if it is necessary reprogramme in a proper way the Telemetering Remote Units.

When the Telemetering Remote Unit communicates with the centre, it displays the messages that indicate the communication condition.

The data base of the Data Collection Centre are configurated as a data base deposit parameters and a data base of the deposit conditions.

The parameters data base, contain all the programming parameters or configuration of each deposit and of the corresponding Telemetering Remote Unit associated with.

The data base of deposit conditions, contains the condition of each deposit updated with each received call.

The centre has the capacity to generate reports with the data received in the communications, generating two types of information:
- immediate report
- daily report.

Each time that a message is received from a deposit with some active alarm, either this corresponding to the deposit or to the Telemetering Remote Unit, an instant report is generated with the received data, that is, an immediate report is made.

Daily, at a previously programmed time, the centre generates through the printer, a report with the registered incidences in the last 24 hours, that is, the daily report.

This report contains a list with the deposits that have called and their general condition, that is, if they are in normal condition or have had some incidence.

In this report, the immediate reports generated in this 24 hours interval are also contemplated.

The centre provides a man/machine interface, that is organized in a series of menus that allow the performance of various operations, such as obtaining reports, handling of the data base, etc., etc.

The menus display consists of a window in the PC monitor in which different options appear in the upper part to be selected by the user.

There are two types or users in the centre that are configurated as the operator and the manager.

The operator has access to all the operations related to the data base, while the manager is in charge of the application maintenance.

The existence of the alarms report is contemplated in the reports, in which appear the Telemetering Remote Unit condition, the maintenance incidence, the empty deposit, the overfull deposit, the refilled deposit, the anticorrosion alarm, the malfunctioning possibility of the level sensor, the communication failure possibility with the deposit unit, the existence of low tension in the deposit unit, the service alarms and the user alarms.

It is considered in the base of the deposit conditions the deposit number, which is configurated as an identical field as the data base parameters, existing a gas level base that is configurated as the deposit gas level at the time of the last call expressed in %, it can be said regarding the corrosion tension considered in the base of deposit conditions that this corrosion level is expressed in Volts.

Regarding the condition of the Telemetering Remote Unit it is observed the fact of considering the normal condition, low battery, failure in the communication with the deposit unit, clock failure, sensor errors, RAM and ROM failure, E2PROM failure, as well as multiple failures. The Telemetering Remote Unit is the equipment in charge of reading the analogical values obtained from the sensors, level and corrosion, located in the deposit. Likewise, it carries out the processing of the above mentioned values as may be the conversion analog-digital, memorizing, codification, etc. for their later transmission, using the switch-over telephone network or via radio towards the Data Collection Centre.

The Telemetering Remote Unit also communicates to the Data Collection Centre, its own alarms and receives from it the necessary data for the programming and its functioning.

There are obviously different types of Telemetering Remote Units, depending on the connection form to the deposit, either by direct connection, through cable or via radio, being necessary in this case to use the deposit unit and the type of feeding received, this connection being by network or by telefeeding.

With the purpose of maintaining an adequate consumption low level in the Telemetering Remote Unit and in the deposit unit if it is equipped, a temporary synchronization algorithm has been foreseen.

This means that in the Telemetering Remote Unit functioning some period of rest and periods of activity are interlayed, having both the Telemetering Remote Unit and the deposit unit the real time clocks always functioning.

The period of rest is obviously characterized by the lack of feeding to the blocks that constitute the unit with the exception of the processing nucleus that remains fed but stopped and the real time clock that remains always functioning.

The clock is in charge of calculating the time of functioning, connecting the feeding to the functioning blocks to start an activity period, in which it is considered the deposits data gathering, inputs inspection and the communication with the Data Collection Centre.

The invention considers the possibility that in the case that a detection of an abnormal condition exists, an activity period is assigned to carry out more than one of the previous processes.

An operator can produce the starting of the Telemetering Remote Unit through a push-button located in a lateral area thereof, so that with the help of the keyboard unit and the pertinent display, carrying out the initiation functions producing an incidence call or deposit unit synchronisation if the connection is via radio.

The data read from the sensors are processed and give rise to the deposit alarms, controlling the Telemetering Remote Unit to its own functioning and generating the indicating calls of the Telemetering Remote Unit condition, controlling at last the inputs situation, giving rise to the alarms to indicate the condition of the four inputs system and alarms that indicate the condition of the user four inputs.

All these alarms and indications have been grouped as a function of the action that is produced through the Telemetering Remote Unit in three types of processes:
1.- Some processes are characterized by not generating a call to the Data Collection Centre, that is, they communicate in the programmed date and time.
2.- The second processes are characterized by generating call to the Data Collection Centre in the programmed time of the day in which it has been detected, not changing the programmed call except when they coincide, in which case the call will not be programmed.
3.- The last processes are characterized by generating a call to the Data Collection Centre at the same time in which the alarms are detected, not changing the programmed call except when they coincide, in which case the call will not be programmed.

The alarms and conditions of the Telemetering Remote Unit are the following:
- One alarm indicates that the deposit is below the minimum level programmed by the Data Collection Centre, activating itself when reading the deposit data, it is detected that it is below the minimum and is deactivated when it is read that the deposit level is over the minimum or when the activated call is transmitted to the centre.
   When this alarm is activated it generates a call request to the centre for this day at the time the centre has programmed and if it disappears before the transmission, that is, a level increase has been detected, the call request to the centre is cancelled.
- Another alarm indicates that the deposit level is above the maximum permitted by the centre, activating the first time when is detected that the level has exceeded the limit and is deactivated when is transmitted to the centre, generating an immediate call to the centre to communicate it, and to avoid to call the centre each time the deposit data are read while the level is higher than the maximum, for this reason the maximum alarm is activated only if in the previous reading the level does not exceed the limit.

As it is an important alarm, although when it is read again before communicating to the centre and it is detected that the level has already decreased, the alarm remains active and will be transmitted to the centre as such, although the present gas level that is transmitted will not be above the allowed maximum.

Another alarm indicates that a refilling of the deposit has been produced, activating itself when between two data readings an increase is detected in the deposit level of 20% and is deactivated when is transmitted to the centre.
- There is another alarm which indicates that the deposit anticorrosion tension is below the programmed limit, activating itself when this condition is detected and is deactivated when disappears or when is transmitted to the centre.
- The invention considers a fifth alarm that will indicate the existence of a damage in the level sensor, and when an affected value is read the alarm is deactivated or when is transmitted.
   It is foreseen the existence of an alarm assigned to indicate the existing damage in the corrosion electrode, which is activated when an open circuit or a tension above the possible maximum is detected, and is deactivated when a tension inside the limits is read or when it communicates to the centre.
- There is a failure indicating alarm in the communication with the deposit unit and therefore its installation has only sense in the Telemetering Remote Units that act via radio.

This alarm is activated when a communication attempt fails and is deactivated when the correct message is received or when it is transmitted to the Data Collection Centre.

Finally, it is considered the existence of an alarm that indicates that the installed battery in the deposit unit is low, which installation has only sense in the Telemetering Remote Unit when communicates with it or with the deposit via radio.

The invention has available a checking system for the Telemetering Remote Unit conditions, that indicate that the battery of that unit is low and it is necessary to change it, activating this alarm when the reading of the battery tension is below the required minimum for the normal functioning.

The condition of the battery is read in the programme data readings, both in low charge and in maximum charge and it is deactivated every time the communication is made with the centre or if in the readings at maximum charge the correct tension level is detected.

Similarly to the deposit unit, this unit has an alarm that indicates a failure in the communication when the unit emits its messages via radio.

The condition of the clock installed in the Telemetering Remote Unit is verified by an alarm that is activated when communicating with the Data Collection Centre, a failure is detected, such as may be when the time that is sending differs in more than two minutes with the time of the Telemetering Remote Unit, deactivating in the moment that is communicating to the centre or when the difference is lower than two minutes.

If there is any error in the data readings, such as may be in the sensors or from converter, an alarm sets in motion.

There are also alarms to indicate failures in the memory RAM, ROM and E2PROM, or when more than one of the above mentioned alarms have been produced.

In a totally summarized explanation and following the figure number 1, the invention is configurated from a connection (1) to the network, with or without ground connection, from which three conventional colour cables blue, green and brown (2) are originated, which are connected with a general module (3) in which there is integrated a radio module (12) supplied with its receiving antenna pertinent cable (13), originated from the general module (3) some connections up to an interconnection box (5) to the telephone line (4), having a central or main module (3) of the pertaining connection to an extension cable for connections (15) with its corresponding connection (6) to a telephone (7).

In this same figure it is considered the existence of the deposit unit (8), provided with a sensor (9).

In the central module (3) there is one connection to the keyboard unit (16) and in the same figure it is appreciated the existence of a radio station unit (10), endowed of its corresponding antenna (11), provided with the necessary wiring up to the level and corrosion sensors.

Following the figure number 2, in relation to a block diagram it can be seen how they are properly interconnected, showing AC network feeding block (17), a feeding selection block (18) connected to the battery block (19) which at the same time is joined to the converter (20) and at the same time to the corresponding real time clock block RTC (23), communicating with the feeding control (22) and this one with the tension block of reference (21).

In the central zone a microcontroller is incorporated (25) joined on one hand to the real time clock block RTC (23) and on the other hand to the radio feeding control (24) with the block (27) assigned to be used as radio module connector.

With the reference (27'), directions and control are indicated in the data bus, connecting at the same time with the peripherics buffer (31) with the RAM memory (32) and with the ROM memory (33), being interconnected to the peripherics buffer (31) with the microcontroller (25) through a decoder (30). This buffer controls the keyboard unit through the corresponding connector (40).

The microcontroller (25), is connected with the system/user input interface (39) and at the same time with the battery supervision block (37) just as with the interface with sensors (38) and this one with the line relays excitation block (36) and at the same time this last one with the multifrequency generation block (35).

At the same time the block (35) is connected to the telephone line interface (28) and the modem and tones detector (29) connected at the same time with the microcontroller (25), existing an auxiliary connection from the telephone line interface (28) to the unhooking telephone detector (34).

Continuing with the figure number 3, it is observed how the microcontroller (25) is connected to an external programming interface (42), to a RTC lock (44), which at the same time communicates with the block (43) corresponding to the initiation circuit, having pertinent connections, the blocks (43) and (44) in order to connect with the batteries block (19), to feeding control block (22), which at the same time is connected through a main feeding connection (46) to the tension regulator (45) and this one at the same time to the tension block of reference (21).

On the other hand the microcontroller (25) communicates or connects with the radio feeding control block (24), connected through a feeding and stop cable (47) to a radio module connector (27) that receives communication from the transversal filter (49) and this one at the same time from the starcom block (48) connected with the microcontroller (25).

Finally it should be indicated that the battery supervision block (37) and the interface block with sensors (38) are equally communicated with the microcontroller.

It is not considered necessary to extend this description so that any expert in the art understands the scope of the invention and the advantages derived from the same.

The materials, form, size and elements arrangement will be susceptible of variation provided that it supposes no changing in the essential part of the invention.

The terms in which this memory has been described should be always taken without limitation and with a full extensive character.

## Claims

**1.-** An oil liquefied gases telemetering system, assigned to maintain informed at all times both the user and the distributor, of the oil liquefied gases deposit content, such as it may be the propane gas, sending the gathered information up to the calculation and control centre provided with a computer with pertinent programme according to the management to be carried out, characterized for being constituted from a data collection centre provided with a computer PC-AT type or compatible, in which a data base is available, a Telemetering Remote Unit basically constituted by the equipment that carries out the deposit data gathering, their processing and their communication with the data collection centre and a deposit unit that forms a Telemetering Remote Unit subsystem, depending on the chosen configuration thereof appearing or not, which unit is totally autonomous and not being governed by the Telemetering Remote Unit, making this deposit unit the data gathering in a similar way as the Telemetering Remote Unit, carrying out a pre-processing of the gathered data and making the communication of these data via radio or via telephone to the Telemetering Remote Unit.

**2.-** An oil liquefied gases telemetering system, according to the first claim, characterized in that the Data Collection Centre which is the receiver of the calls coming from the telemetering units, makes its remote programming, storing and managing the received data, having a colour monitor, a display adaptor, a flexible disc unit, RAM memory, a hard disc, different inputs for keyboard, mouse and printer, the PC having at least two modems that function at 300 bauds each one connected to a telephone line box, optionally incorporating a printer for obtaining listings and reports related to the system.

**3.-** An oil liquefied gases telemetering system, according to the first and second claims, characterized in that the Data Collection Centre, is connected for the information reception for 24 hours a day receiving the telemeterings coming from the Telemetering Remote Units, continuously putting up to date the data base in reference to the deposits condition producing when necessary the reprogramming of the own Telemetering Remote Units, showing in display the messages that indicate the condition of the communication and having a man/machine interface provided with different menus and having at least eleven possible alarms that produce the condition of the Telemetering Remote Unit, the maintenance incidence, the deposit condition, that is, empty, overfull and refilling, anticorrosion, damage in the level sensor, failure in the communication with the deposit units, low tension in the deposit unit, service and user alarms, showing in display the activated selected alarm and reflecting it in a report.

**4.-** An oil liquefied gases telemetering system, according to the first claim, characterized in that the Telemetering Remote Unit, in charge of receiving the data coming from the deposit, processes them and then at the programmed time sends them to the data collection centre, incorporating this unit a keyboard and a display, that is connected thereof through a connector of 25 poles, being necessary this keyboard and display unit to carry out supervision and programming manual functions, having the Telemetering Remote Unit different inputs, in order to process the input analogical values through a resistive type sensor with a variable resistance pole in electrical contact with the deposit, that acts as ground connection, changing the resistance linearly with the position of the buoy or sensor float, that is, with the deposit level, being provided of four types of different sensors, depending on the resistance value with one variation from 0 to 100%, having an input in order to measure the corrosion, that affects all the deposit analogical tension values from 0 to +2V, having a common ground connection for the level sensor and a reference electrode copper/copper sulphate type for a fixed installation, having exclusively foreseen a sensor model for the control of buried deposits.

**5.-** An oil liquefied gases telemetering system, according to the fourth claim, characterized in that the system inputs are provided with meter functionality or programmable mode alarm via telephone or via radio from the data collection centre, existing four differentiate versions of the Telemetering Remote Units as a function of their sensor connection (interface), as well as their feeding mode, being able to be connected with the deposit for level reading and corrosion by cable or by radio, or by feeding mode, that is, by alternate network or telephone network.

**6.-** An oil liquefied gases telemetering system, according to the fifth claim, characterized in that the Telemetering Remote Units can have a connection available to a deposit by cable, having alternate network feeding, this type of unit being assigned to installations with frequent supervision, provided with direct access to the deposit and having back-up by battery for 2 hours, or may be by connection to deposit by cable, having telephone network feeding (telefeeding) and being assigned to installations with low supervision and direct access to the deposit, provided with a back-up with battery for one week, only for the purpose of supervision.

**7.-** An oil liquefied gases telemetering system, according to the fifth claim, characterized in that the Telemetering Remote Unit can be configurated and can be provided with a deposit connection for linkage via radio, being fed by the network with alternate current, being assigned to installations with low supervision without direct access to the deposit, having a back-up with battery for only one week for the purpose of supervision or provided with a deposit connection for linkage via radio, being fed through the telephone network, that is, telefed, and assigning it to installations with low supervision without direct access to the deposit and equally having a back-up with a battery for two hours.

**8.-** An oil liquefied gases telemetering system, according to the first claim, characterized in that the Telemetering Remote Unit, is configurated as an equipment in charge of reading the analogical values gathered from the sensors, level and corrosion located in the deposit, having a series of alarms that communicate to the Data Collection Centre, and receives from this the necessary data for the functioning programming, having a temporary synchronization algorithm that maintains an appropriate low consumption level in the Telemetering Remote Unit and optionally it has available the same in the deposit unit, interchanging periods of rest and period of activity.

**9.-** An oil liquefied gases telemetering system, according to the first claim, characterized in that the deposit unit will be located in installations that require the use of Telemetering Remote Units with connection to the deposit by radio linkage, through two data gathering inputs, being able to process the analogical output values of a resistive type sensor with a pole of variable resistance in electrical contact with the deposit that acts as ground connection, and the resistance will linearly change with the position of the buoy or sensor float, that is, with the deposit level, being provided the possibility of using four types of different sensors depending on the resistance value with one variation from 0 to 100%.

**10.-** An oil liquefied gases telemetering system, according to the ninth claim, characterized in that the deposit unit has a corrosion detecting input that affects the tension analogical values from 0 to +2V of the deposit with common ground connection for the level sensor and a reference electrode copper/copper sulphite type for a fixed installation, having foreseen only one sensor model for the buried deposits control and on the other hand, the Telemetering Remote Unit is connected via radio to send the previously processed data coming from the deposit sensors, the deposit unit functioning being totally independent of the Telemetering Remote Unit and both units being synchronized through temporary windows, and equally having both units of a real time clock initially synchronized that calculates the initial time of data gathering and transmission thereof by the deposit unit and of the reception of the data gathered by the Telemetering Remote Unit.

**11.-** An oil liquefied gases telemetering system, according to the first claim, characterized in that the condition of the deposit unit is provided with different alarms and detectors incorporated to the Telemetering Remote Unit, detecting the condition of the deposit unit for its later information to the Data Collection Centre.

**12.-** An oil liquefied gases telemetering system, according to eleventh claim, characterized in that it has available an alarm that indicates that the deposit level is below the minimum programmed by the Data Collection Centre, which is activated when reading the deposit data it is detected that is below the minimum and is deactivated when it is read that the deposit level is over the minimum or when the activated alarm is transmitted to the centre, generating a call request to the centre when it is activated for that day at the time programmed by the centre, but if before transmitting it has disappeared, detecting an increase of level, the call requested to the centre is cancelled.

**13.-** An oil liquefied gases telemetering system, according to the eleventh claim, characterized in that the Telemetering Remote Unit has available an alarm that indicates that the deposit level is above the maximum allowed by the centre, activating itself the first time when it is detected that has exceeded the level and is deactivated when is transmitted to the centre, generating when is activated an immediate call to the centre to communicate it, and to avoid the call to the Data Collection Centre, each time that it reads the deposit data while the level is higher than the maximum, the maximum alarm is activated if in the previous reading the level do not exceed the limit and although before being communicated to the centre is read again and is detected that the level has already decreased, the alarm keeps active and will transmit to the centre as such, although the present gas level that is transmitted is not above the maximum allowed.

**14.** An oil liquefied gases telemetering system, according to eleventh claim, characterized by having an alarm that indicates that a refilling of the deposit has been produced, which is activated when an increase is detected between two data readings in the deposit level of 20% and is deactivated when it is transmitted to the centre.

**15.-** An oil liquefied gases telemetering system, according to the eleventh claim, characterized in that the Telemetering Remote Unit has available an alarm that indicates that the deposit anticorrosion tension is below the programmed limit, which is activated when this condition is detected and is deactivated when disappears or when the information is transmitted to the centre, not generating any special call when it has to communicate to the centre by data calling or of other alarms ignoring this information.

**16.-** An oil liquefied gases telemetering system, according to the eleventh claim, characterized in that the Telemetering Remote Unit has an alarm that indicates the existence of a damage in the level sensor, detected as damage when is read in the converter A/D a value that indicates an open circuit or that is out of the limits of the conversion curve defined for that sensor, and when an acceptable value is read the alarm is deactivated, or when it is transmitted not generating more than one call a day although it is activated every time that is read.

**17.-** An oil liquefied gases telemetering system, according to the eleventh claim, characterized in that the Telemetering Remote Unit has an alarm that indicates damage in the corrosion electrode, which is activated when an open circuit is detected or a tension above the possible maximum 2V and the alarm is deactivated when a tension is read within the limits or when is communicated to the centre, not generating this alarm an extra call.

**18.-** An oil liquefied gases telemetering system, according to the eleventh claim, characterized in that the Telemetering Remote Unit has one alarm that indicates a failure in the communication with deposit unit, incorporating this alarm in the Telemetering Remote Unit via radio, activating when a communication attempt with the same fails and deactivating when a correct message is received or when is transmitted to the Data Collection Centre.

**19.-** An oil liquefied gases telemetering system, according the eleventh claim, characterized in that the Telemetering Remote Unit has an alarm which indicates that the deposit unit battery is low, incorporating this alarm in the Telemetering Remote Units via radio, activating when this indication is received in relation to the condition of the deposit unit and deactivating when this alarm is not received from the deposit unit or when it is transmitted to the centre.

**20.-** An oil liquefied gases telemetering system, according to the eleventh claim, characterized in that the Telemetering Remote Unit has the possibility of incorporating an alarm indicating that the concerned unit battery is low and needs changing, activating when reading that the battery tension is below the minimum required for the normal function, reading the condition of the battery in the data readings programmed in low charge and in the calls to the centre in maximum charge, deactivating each time that it communicates with the centre or if the readings at maximum charge detects a correct tension level.

**21.-** An oil liquefied gases telemetering system, according to the eleventh claim, characterized by having available an indicator or alarm of the Telemetering Remote Unit condition, failure indicator in the communication with the deposit unit, and another alarm that indicates that the clock incorporated in this unit is failing, activating when communicating with the Data Collection Centre, the time that is sent differs in more than 2 minutes from the time existing in the Telemetering Remote Unit, deactivating in the instant in which it communicates to the centre and when the difference is less than 2 minutes.

**22.-** An oil liquefied gases telemetering system, according the eleventh claim, characterized in that the Telemetering Remote Unit has an alarm that indicates the existence of an error in the data readings, either in the sensors or in the converter A/D, and equally has an alarm that will indicate failures in memory RAM, ROM, or E2PROM, and an alarm indicating that is active when more than one previous alarms have been produced.

**23.-** An oil liquefied gases telemetering system, according to the first claim, characterized for having a network connection (1), with or without ground connection, which is communicated through a conventional wiring (2) up to a central unit (3) inside of which a radio module is incorporated (12), supplied with a cable for receiving antenna (13), originated from the central unit (3) some connections towards an interconnection box (5) from which a telephone line emerges, equally existing a second connection having an extension cable to connections (15) provided with a wiring (6) for its connection to a telephone apparatus (7), having a liquefied gases deposit (8), provided with a sensor (9), equally existing in the central unit (3) a connection with the keyboard unit (16) and having a whole unit or radio transmitting module (10) connected with the deposit unit existing an emitting and receiving antenna (11).

**24.-** An oil liquefied gases telemetering system, according to the first claim, characterized for having an AC network feeding block (17), a block (18) for the feeding selection, a block (19) for the battery, connected to a converter (20) and at the same time with the feeding control (22) and this one with the block (21) for the tension of reference.

**25.-** An oil liquefied gases telemetering system, according to the first claim, characterized for having a microcontroller (25) connected to a RTC unit or block (23), which is interconnected with the initiation circuit (26) and at the same time with a connection to the battery block (19), having the microcontroller (25) of the pertinent connection to a modem and tones detector (29) connected to the telephone line interface (28) and at the same time these two with a block for the multifrequency generation (35), being connected to the telephone line interface (28) with the line relays excitation block (36).

**26.-** An oil liquefied gases telemetering system, according to the first claim, characterized in that the microcontroller (25) is connected with a radio feeding control (24) and at the same time this one is connected to the radio module connector (27), which is connected with a direction and control data bus (27') which is interconnected with the RAM memory block (32) and ROM (33), and at the same time with the block (31) of the buffers, which through a decoder (30) receives orders from the microcontroller (25) equally connecting the microcontroller (25) with the battery supervision block (37), the system/user input interface (39) and the interface with sensors (38).

**27.-** An oil liquefied gases telemetering system, according to the first claim, characterized in that the microcontroller (25), is connected to the block (44) for RTC, which at the same time is connected with an initiation circuit (43) and both with the battery block (19), which is interconnected with the feeding control (22) and this one through a main feeding connection (46) to a tension regulator (45) that is interconnected with the microcontroller (25), which is connected at the same time with the radio feeding control (24) and through a feeding /RAD connection (47) to the radio module connector (27) that receives orders from the microcontroller (25) through the starcom (48) connected on one hand to the transversal filter (49) that is connected with the radio module connector (27) and at the same time with the data/directions/control bus (27').

**28.-** An oil liquefied gases telemetering system, according to the first claim, characterized in that the microcontroller (25) is connected to the battery supervision block (37) and to the interface with sensors (38), and at the same time with the external programming interface (42).
